# EUROPÄISCHE PATENTSCHRIFT

(11) **EP 1 949 497 B1**
(45) Veröffentlichungstag und Bekanntmachung des Hinweises auf die Patenterteilung: **20.06.2012**
(21) Anmeldenummer: 06806597.8
(22) Anmeldetag: 28.10.2006
(51) Int. Cl.: H02J 5/00

(54) **STECKVERBINDERSYSTEM UND EINSPEISEGERÄT**
PLUG-IN CONNECTOR SYSTEM AND FEED-IN DEVICE
SYSTEME DE FICHE DE CONNEXION ET APPAREIL D'INJECTION

(30) Priorität: 09.11.2005 DE 102005053773
(43) Veröffentlichungstag der Anmeldung: 30.07.2008
(73) Patentinhaber: SEW-EURODRIVE GmbH & Co. KG, 76646 Bruchsal (DE)
(72) Erfinder: MARTIN, Oliver, 76703 Kraichtal-Oberacker (DE); SCHMIDT, Josef, 76676 Graben-Neudorf (DE); UHL, Thomas, 76646 Bruchsal (DE); SCHROEDER, Detlev, 68809 Neulussheim (DE)
(86) Internationale Anmeldenummer: PCT/EP2006/010390
(87) Internationale Veröffentlichungsnummer: WO 2007/054212

(56) Entgegenhaltungen:
- DE-A1- 4 446 779
- DE-B3- 10 355 779
- DE-U1- 8 129 575
- DE-U1- 20 017 936

## Beschreibung

Die Erfindung betrifft ein Steckverbindersystem und ein Einspeisegerät.

Aus der DE 44 46 779 ist ein System zur berührungslosen Energieübertragung bekannt, bei dem ein mittelfrequenter Strom in einen Primärleiter eingespeist wird. Der Primärleiter kann dabei HF-Litze umfassen. Bei einem solchen System treten mittelfrequente Wechselströme von mehr als 10 Ampere auf. Beispielsweise sind 30 Ampere oder 60 Ampere vorhanden. Es handelt sich also hierbei um Starkstromtechnik.

**Aus der** DE 103 55 779 B3 **ist ein HF-Steckverbinder für Koaxialkabel bekannt.**

**Aus der** DE 200 17 936 U1 **ist ein Polverbinder für Akkumulatoren bekannt.**

**Aus der** DE 44 46 779 A1 **ist eine Anordnung zur berührungslosen induktiven Übertragung von elektrischer Leistung bekannt.**

Der Erfindung liegt daher die Aufgabe zugrunde, die Kabelverlegung in Anlagen zu vereinfachen.

Erfindungsgemäß wird die Aufgabe bei dem Steckverbindersystem nach den in Anspruch 1 und bei dem Einspeisegerät nach den in Anspruch 14 angegebenen Merkmalen gelöst.

Wichtige Merkmale der Erfindung bei dem Steckverbindersystem sind, dass das Steckverbindersystem zumindest ein Steckverbinderteil und Gegensteckverbinderteil umfasst, wobei das Steckverbinderteil ein metallisches Kontaktteil umfasst, welcher an seinem ersten axialen Endbereich eine Lötverbindung mit HF-Litze aufweist, und in einem Isolierkörper verbunden ist. Insbesondere ist das Steckverbindersystem für ein mittelfrequent arbeitendes System zur berührungslosen Energieübertragung vorgesehen und vorteilhaft verwendbar. Von Vorteil ist dabei, dass ein Steckverbindersystem für Starkstromtechnik geschaffen ist, bei dem der Skineffekt verringert ist. Somit ist ein Steckverbinden des Primärleiters bei einem mittelfrequent arbeitenden berührungslosen Energieübertragungssystem ermöglicht, obwohl der Primärleiter aus HF-Litze gefertigt ist.

Bei einer vorteilhaften Ausgestaltung ist ein Steckverbindersystem ausgebildet, insbesondere für ein mittelfrequent arbeitendes System zur berührungslosen Energieübertragung, umfassend Steckverbinderteil mit einem ersten Kontaktteil und Gegensteckverbinderteil mit einem zweiten Kontaktteil, wobei erstes und zweites Kontaktteil zueinander passend ausgebildet sind, wobei das erste Kontaktteil an seinem ersten axialen Endbereich mit Litzendrähten einer HF-Litze stoffschlüssig, insbesondere mittels Lötverbindung, verbunden ist und das erste Kontaktteil in einem Isolierkörper verbunden ist. Von Vorteil ist dabei, dass ein zuverlässiger elektrischer Kontakt zwischen HF-Litze und einem Kontaktteil ausgebildet ist, wobei das Kontaktteil als Kontaktelement einer Steckverbindung verwendbar ist. Somit sind vorteilhaft mittelfrequente Ströme von 10kHz, insbesondere 25kHz oder mehr als 50 kHz, mit Starkstrom-Stromstärken von 10A, insbesondere 60A, 85A oder mehr als 100A, durchleitbar.

Bei einer vorteilhaften Weiterbildung sind die Litzendrähte der HF-Litze mittels der Lötverbindung untereinander stoffschlüssig verbunden. Von Vorteil ist dabei, das HF-Litze für Starkstrom-Stromstärken einsetzbar ist. Denn durch die Erfindung wird unter anderem bewirkt, dass auch die im Inneren der HF-Litze angeordneten Litzendrähte elektrisch mit dem Kontaktteil verbindbar ist. Insbesondere ist der ausgebildete Kontakt zwischen HF-Litze und Kontaktteil dauerhaft thermisch stabil mit großen Stromstärken beaufschlagbar. Weiterer Vorteil ist, dass Litzekabel mit großem Durchmesser einsetzbar sind, die mit dem Kontaktteil über eine große Gesamtkontaktfläche verbindbar sind.

Bei einer vorteilhaften Weiterbildung ist das Kontaktteil an seinem ersten axialen Endbereich eine Ausnehmung aufweist, die zur Lötverbindung des ersten Kontaktteils mit den Litzendrähten der HF-Litze mit Lötzinn ausgefüllt. Somit ist eine elektrische Verbindung der HF-Litze mit dem Kontaktteil ausgebildet, die einfach fertigbar ist. Insbesondere sind Hohlräume zwischen den Litzendrähten reduzierbar oder sogar vermeidbar.

Ein erfindungsgemäßes Verfahren zur Fertigung des Kontaktes zwischen Kontaktteil und HF-Litze umfasst zumindest in einem ersten Schritt ein Einführen der HF-Litze in eine Ausnehmung des Kontaktteils und in einem zweiten Schritt das Auffüllen der Ausnehmung mit Lötzinn oder einem anderen Lötmittel.

Bei einer vorteilhaften Weiterbildung ist die HF-Litze von einem Kabel umfasst, an dessen einem Ende das Steckverbinderteil angebracht ist. Somit ist ein Kabelsystem ausgebildet, das einfach verlegbar und anschließbar ist und das als Primärleiter zur berührungslosen Energieübertragung verwendbar ist.

Weiterer Vorteil ist, dass die Steckverbindung dicht und in hoher Schutzart ausführbar ist. Somit ist das den mittelfrequenten Strom in den Primärleiter einspeisende System, beispielsweise der Einspeisesteller, also die Einspeisung, dicht ausführbar und in einer Anlage im Feld installierbar.

Die Steckverbindung ist nun außen am Gehäuse der Einspeisung realisierbar. Somit ist ein besonders schnelles Steckverbinden ermöglicht. Außerdem ist der Primärleiter nun vorkonfektioniert herstellbar und somit die Fertigung der Anlage besonders einfach und schnell.

Bekannte Steckverbinder für hochfrequente Ströme sind bei der Erfindung nicht einsetzbar, da sie nur für die Schwachstromtechnik konzipiert sind. Bekannte Steckverbinder für Starkströme sind bei der Erfindung nicht einsetzbar, da sie für Niederfrequenztechnik konzipiert sind.

Bei der Erfindung ist die Verlötung und/oder Vercrimpung und/oder Quetschung der Litze mit dem Kontaktteil derart ausgeführt und die Materialien derart ausgewählt, dass Starkstrom übertragbar ist ohne wesentliche Verluste.

Bei einer vorteilhaften Ausgestaltung umfasst das Steckverbinderteil ein metallisches Kontaktteil, welcher an seinem anderen axialen Endbereich kraftschlüssig verbindbar ist mit einem ersten Endbereich eines metallischen Kontaktteils eines Gegensteckverbinderteils. Von Vorteil ist dabei, dass die Erfindung mit sehr einfachen und kostengünstigen Teilen realisierbar ist.

Bei einer vorteilhaften Ausgestaltung ist das Gegensteckverbinderteil ein Gehäusestecker, der in einer Gehäusewand dicht und in hoher Schutzart lösbar verbunden ist. Von Vorteil ist dabei, dass die Steckverbindung außerhalb des Gehäuses ausführbar ist.

Bei einer vorteilhaften Ausgestaltung umfasst das Gegensteckverbinderteil das metallische Kontaktteil, welcher an seinem zweiten axialen Endbereich eine Lötverbindung mit HF-Litze aufweist, und in einem Isolierkörper verbunden ist. Von Vorteil ist dabei, dass eine Steckerverbindung ausbildbar ist, durch die mittelfrequente Starkströme durchleitbar sind.

**Bei einer vorteilhaften Ausgestaltung weist das zweite Kontaktteil, also das Kontaktteil des Gegensteckverbinderteils, eine Ausnehmung zur Aufnahme des ersten Kontaktteils auf. Zusätzlich sind an der Ausnehmung entlang eines Umfangs mehrere nach innen gerichtete Federelemente angebracht, insbesondere regelmäßig angeordnet, beispielsweise drehsymmetrisch. Somit wird vorteilhaft der elektrische Kontakt zwischen erstem und zweiten Kontaktteil verbessert, und es sind Starkströme durchleitbar.**

Bei einer vorteilhaften Ausgestaltung weist der Isolierkörper ein oder mehrere Federelemente zur Verrastung des Kontaktteils beim Einführen in den Isolierkörper auf. Von Vorteil ist dabei, dass die Federelemente einteilig ausführbar sind mit dem Isolierkörper.

Bei einer vorteilhaften Ausgestaltung ist der Isolierkörper ein Hohlteil, in dessen Inneres das Kontaktteil einführbar ist. Von Vorteil ist dabei, dass das Kontaktteil von einer ersten Seite her einführbar ist und derart verbindbar ist, dass er am anderen Ende etwas herausragt zur Verbindung mit einem weiteren Metallteil.

Bei einer vorteilhaften Ausgestaltung umfasst der Isolierkörper an seinem einen axialen Endbereich ein Gewinde zur lösbaren Verbindung mit einer Zugentlastungsmutter. Von Vorteil ist dabei, dass eine mechanische Entlastung vorgesehen ist.

Bei einer vorteilhaften Ausgestaltung ist am Isolierkörper eine Rändelmutter vorgesehen. Von Vorteil ist dabei, dass eine stabile lösbare Verbindung mit dem Gehäusestecker realisierbar ist.

Bei einer vorteilhaften Ausgestaltung ist ein Isolierkörper in eine Buchse, beispielsweise Metall- oder Kunststoffbuchse, eingesetzt, wobei die Buchse in einer Ausnehmung einer Gehäusewand, insbesondere der Einspeisung, vorgesehen ist. Von Vorteil ist dabei, dass die Steckverbindung an der Außenseite des Gehäuses vornehmbar ist.

Bei einer vorteilhaften Ausgestaltung ist die Steckverbindung dicht und in hoher Schutzart ausgeführt, insbesondere unter Verwendung von Dichtungen. Von Vorteil ist dabei, dass das Einspeisegerät innerhalb einer Fertigungsanlage, also dezentral im Feld, installierbar ist.

Bei einer vorteilhaften Ausgestaltung ist an der äußeren Oberfläche des Isolierkörpers ein Bereich zur Kennzeichnung vorgesehen. Von Vorteil ist dabei, dass Typeninformation und technische Daten darstellbar sind.

Bei einer vorteilhaften Ausgestaltung umfasst die HF-Litze eine Vielzahl von gegeneinander isolierten Einzeldrähten. Von Vorteil ist dabei, dass der Skineffekt verringerbar ist.

Bei einer vorteilhaften Ausgestaltung ist in der HF-Litze ein Strom von mehr als 10 Ampere übertragbar. Von Vorteil ist dabei, dass Starkstromtechnik anwendbar ist und industrielle Antriebe berührungslos versorgbar sind.

Bei einer vorteilhaften Ausgestaltung ist die HF-Litze von einem Primärleiter umfasst, der einen mittelfrequenten Wechselstrom führt. Von Vorteil ist dabei, dass starke Ströme mit solch hoher Wechselfrequenz vorsehbar sind für ein Steckverbindersystem.

Bei einer vorteilhaften Ausgestaltung werden ausschließlich Kunststoff und/oder nicht-magnetische Metalle verwendet. Somit werden vorteilhaft Wirbelströme vermieden, so dass die thermische Belastung der Steckverbindung reduzierbar ist.

Bei einer vorteilhaften Ausgestaltung weist der Wechselstrom eine Frequenz im Bereich von 10kHz bis 100kHz auf. Vorzugsweise liegt die Frequenz im Bereich von 20kHz bis 50kHz. Von Vorteil ist dabei, dass zur Herstellung des Wechselstroms in der Endstufe, also Leistungsstufe, des Einspeisegeräts IGBT als elektronische Leistungshalbleiter verwendbar sind.

Wichtige Merkmale bei dem Einspeisegerät sind, dass es für ein mittelfrequent arbeitendes System zur berührungslosen Energieübertragung vorgesehen ist, wobei das Einspeisegerät einen im Wesentlichen konstanten mittelfrequenten Wechselstrom in einen Primärleiter einspeist, der Litze umfasst, wobei das Gerät mindestens in einer Ausnehmung seines Gehäuses ein Gegensteckverbinderteil aufweist, welches mit einem am Primärleiter vorgesehenen Steckverbinderteil verbindbar ist. Vorteilig ist dabei, dass das Starkstromkabel schnell und einfach steckbar verbindbar ist und an der Außenseite des Gerätes verbindbar ist. Dieses ist also dicht und in hoher Schutzart ausführbar und somit dezentral im Feld installierbar.

Weitere Vorteile ergeben sich aus den Unteransprüchen.

### Bezugszeichenliste

1 Einspeisesteller
2 Anschlussbuchsen für Hin- und Rückleiter, Primärleiter
3 Stecker für Primärleiter
4 Primärleiter
21 Rändelmutter mit Innengewinde
23 Kunststoffgehäuse
24 Bereich für Beschriftung oder Kennzeichnung
25 Gewinde
26 Zugentlastungsmutter
31 Kontaktteil
32 Isolierkörper
33 Feder
41 Metallbuchse
42 Kunststoffbuchse
43 Endanschlagsring
44 Kontaktbuchse

Die Erfindung wird nun anhand von Abbildungen näher erläutert:

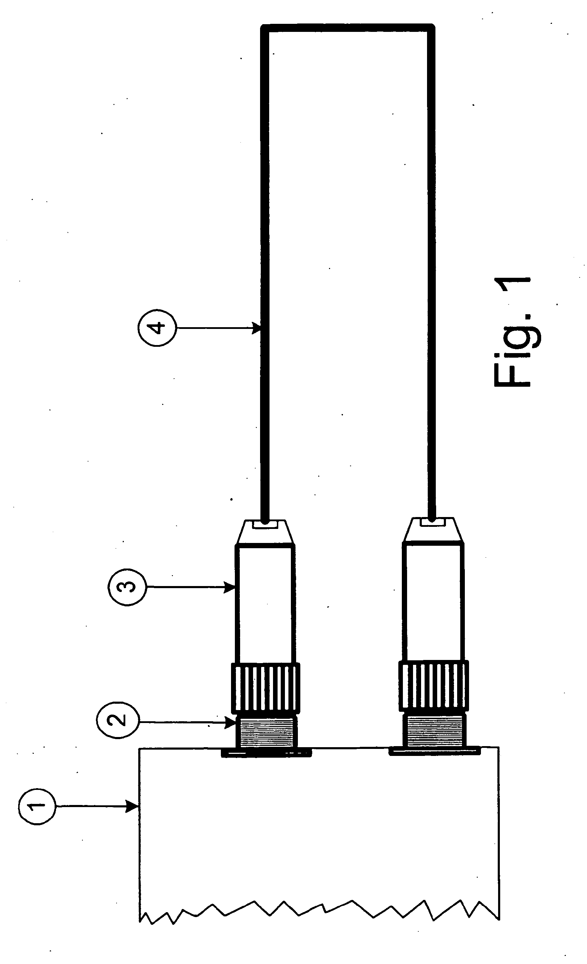

In der Figur 1 ist eine erfindungsgemäße Vorrichtung gezeichnet. Dabei ist der Primärleiter 4 mittels einer Steckverbindung mit dem Einspeisesteller 1 verbunden. Hierzu weist der Einspeisesteller 1 Anschlussbuchsen 2 für den langgestreckten Primärleiter 4 auf. Die Sekundärspule des bewegbar angeordneten, in Figur 1 nicht gezeigten Verbrauchers wird entlang dem Primärleiter verfahren. Es wird ein mittelfrequenter Strom eingespeist, dessen Frequenz höher als 15 kHz beträgt. Es sind Frequenzen bis 100kHz und auch darüber verwendbar. Vorzugsweise wird eine Frequenz aus dem Bereich zwischen 20 und 50 kHz eingesetzt.

Der Primärleiter 4 weist an seinen beiden Enden einen Stecker 3 auf, der in die Anschlussbuchse 2 einsteckbar ist. Mit dem Stecker ist es nun ermöglicht, den Einspeisesteller 1 dicht und in hoher Schutzart aufzubauen. Die Unfallgefahr beim Anschließen des Linienleiters entfällt, da das Gerät, also der Einspeisesteller 1, verschlossen bleibt. Somit ist ein schneller, kostengünstiger und einfacher Austausch ermöglicht.

Außerdem ist ein vorkonfektioniertes Primärleiterkabel lieferbar, das schnell und einfach verbindbar ist und mittelfrequente Ströme mit wenig ohmschen Verlusten in der Steckverbindung übergeben kann. Das Primärleiterkabel umfasst HF-Litze zur Verminderung von Verlusten.

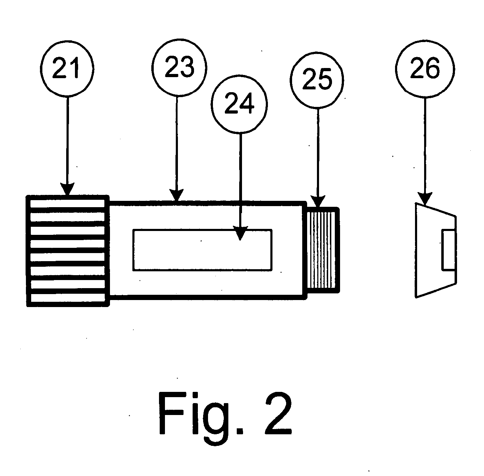

In Figur 2 ist das Prinzip des Leitungssteckverbinderteils, das mit dem Primärleiter verbunden ist genauer gezeigt. Die Rändelmutter 21 ist mit Innengewinde ausgeführt und ist aus Kunststoff gefertigt. Insbesondere weist sie einen Dichtring auf zum Herstellen einer dichten Verbindung mit der Anschlussbuchse 2, die vorzugsweise aus Metall gefertigt ist.

Das Kunststoffgehäuse 23 weist einen Bereich 24 für Beschriftung oder Kennzeichnung auf und an seinem anderen, von der Rändelmutter 21 abgewandten Ende ein Gewinde 25, auf das die Zugentlastungsmutter 26 aufschraubbar ist.

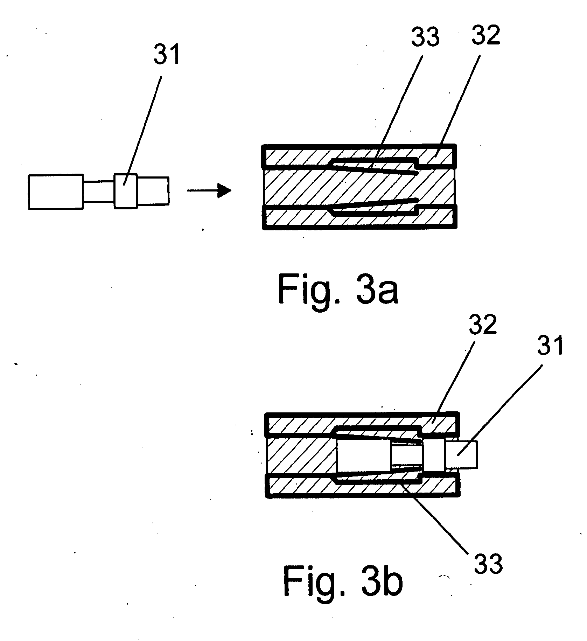

In der Figur 3a ist das Prinzip der Kontaktteilhalterung gezeigt. Daher ist die Außenkontur des Isolierkörpers 32 nicht korrekt dargestellt. In der linken Bildhälfte ist das Kontaktteil 31 gezeigt, der in das Innere des Isolierkörpers 32 eingeschoben wird. Eine an der Innenseite angebrachte Feder 33 wird beim Einschieben des Kontaktteiles ausgelenkt und verrastet das Kontaktteil an seiner Vertiefung.

In das Kontaktteil ist in der Figur 3a nicht gezeigte Litze von links in eine topfförmige Ausnehmung eingeführt und verlötet. Die Lötverbindung ist derart ausgeführt, dass Ströme von 60A und mehr, insbesondere von 85A und mehr, dauerhaft ohne thermische Überlastung übertragbar sind. In der Figur 3b ist der Isolierkörper mit eingeschobenem Kontaktteil 31 gezeigt.

Nach dem in Figur 3a und 3b gezeigten Prinzip ist auch das Kunststoffgehäuses 23 und auch die Kunststoffbuchse 42 aufgebaut.

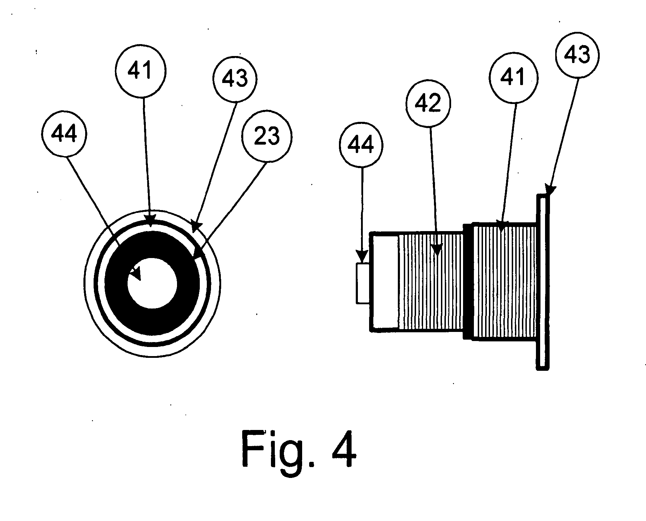

In der Figur 4 ist der Gehäusesteckverbinder gezeigt, wobei die Metallbuchse 41 aus nicht magnetischem Metall ausgeführt ist, um Wirbelströme zu vermeiden. Außerdem ist an ihr ein Dichtring vorgesehen. Beispielsweise ist Aluminium oder Messing oder ein anderes para- oder diamagnetisches Material verwendbar.

Der Endanschlagsring 43 ist mit eingearbeitetem Dichtring vorgesehen zur Abdichtung in Richtung der nicht gezeigten Gehäuseinnenwand.

Die Kunststoffbuchse 42 ist wiederum mit eingegossener Kontaktteilhalterung, umfassend eine Feder, entsprechend dem in Figur 3a gezeigten Prinzip ausgeführt.

Die Kontaktbuchse 44 ist derart ausgeformt, dass der aus dem Kunststoffteil 23 herausstehende Endbereich des Kontaktteiles nach Figur 3b von ihm aufnehmbar ist beim Steckverbinden.

Bei weiteren erfindungsgemäßen Ausführungsbeispielen ist statt der Metallbuchse 41 auch eine Buchse aus Kunststoff verwendbar. Gleiches gilt für den Endanschlagsring 43.

**Bei einem weiteren Ausführungsbeispiel ist das Kontaktteil 31 als Crimpkontakt ausgebildet. In das Kontaktteil 31 ist in seinem einen axialen Endbereich in eine** Ausnehmung HF-Litze eingeführt, die durch Quetschen, insbesondere Crimpen, und/oder Löten elektrisch verbunden ist.

## Patentansprüche

1. Steckverbindersystem für ein mittelfrequent arbeitendes System zur berührungslosen Energieübertragung,
umfassend Steckverbinderteil (21, 23-26) mit einem ersten Kontaktteil (31) und
Gegensteckverbinderteil (41- 44) mit einem zweiten Kontaktteil,
wobei erstes und zweites Kontaktteil zueinander passend ausgebildet sind,
wobei
das erste Kontaktteil (31) als Crimpkontakt ausgebildet ist und an seinem ersten axialen Endbereich mit Litzendrähten einer HF-Litze stoffschlüssig verbunden, nämlich verlötet, ist
und das erste Kontaktteil (31) in einem Isolierkörper (32) verbunden ist,
wobei das Gegensteckverbinderteil (41-44) ein Gehäusesteckverbinder ist, der in einer Gehäusewand dicht und in hoher Schutzart lösbar verbunden ist,
wobei der Isolierkörper (32) ein oder mehrere Federelemente (33) aufweist, mit welchen das erste Kontaktteil (31) beim Einführen in den Isolierkörper verrastet ist, und
wobei ein weiterer Isolierkörper (42) in eine Buchse (41), die aus Kunststoff oder aus einem nicht-magnetischen Metall, also aus Aluminium, Messing oder aus einem anderen diamagnetischen oder paramagnetischen Material, gefertigt ist, eingesetzt ist, wobei die Buchse (41) in einer Ausnehmung der Gehäusewand angeordnet ist

2. Steckverbindersystem nach mindestens einem der vorangegangenen Ansprüche,
**dadurch gekennzeichnet, dass**
die Litzendrähte der HF-Litze mittels der Lötverbindung untereinander stoffschlüssig verbunden sind.

3. Steckverbindersystem nach mindestens einem der vorangegangenen Ansprüche,
**dadurch gekennzeichnet, dass**
das erste Kontaktteil (31) an seinem ersten axialen Endbereich eine Ausnehmung aufweist, die zur Lötverbindung des ersten Kontaktteils mit den Litzendrähten der HF-Litze mit Lötzinn oder einem anderen Lötmittel ausgefüllt ist.

4. Steckverbindersystem nach mindestens einem der vorangegangenen Ansprüche,
**dadurch gekennzeichnet, dass**
die HF-Litze von einem Kabel umfasst ist, an dessen einem Ende das Steckverbinderteil (21, 23-26) angebracht ist.

5. Steckverbindersystem nach mindestens einem der vorangegangenen Ansprüche,
**dadurch gekennzeichnet, dass**
das Steckverbinderteil ein metallisches Kontaktteil umfasst, welches an seinem anderen axialen Endbereich kraftschlüssig verbindbar ist mit einem ersten Endbereich eines metallischen Kontaktteiles eines Gegensteckverbinderteils.

6. Steckverbindersystem nach mindestens einem der vorangegangenen Ansprüche,
**dadurch gekennzeichnet, dass**
das Gegensteckverbinderteil (41-44) ein zweites metallisches Kontaktteil umfasst, welches an seinem zweiten axialen Endbereich eine Lötverbindung mit HF-Litze aufweist, und in dem weiteren Isolierkörper verbunden ist.

7. Steckverbindersystem nach mindestens einem der vorangegangenen Ansprüche,
**dadurch gekennzeichnet, dass**
der Isolierkörper ein Hohlteil ist, in dessen Inneres das Kontaktteil einführbar ist
und/oder
der Isolierkörper an seinem einen axialen Endbereich ein Gewinde zur lösbaren Verbindung mit einer Zugentlastungsmutter umfasst
und/oder
am Isolierkörper eine Rändelmutter vorgesehen ist.

8. Steckverbindersystem nach mindestens einem der vorangegangenen Ansprüche,
**dadurch gekennzeichnet, dass**
die Steckverbindung dicht und in hoher Schutzart ausgeführt ist unter Verwendung von Dichtungen.

9. Steckverbindersystem nach mindestens einem der vorangegangenen Ansprüche,
**dadurch gekennzeichnet, dass**
an der äußeren Oberfläche des Isolierkörpers ein Bereich zur Kennzeichnung vorgesehen ist.

10. Steckverbindersystem nach mindestens einem der vorangegangenen Ansprüche,
**dadurch gekennzeichnet, dass**
die HF-Litze eine Vielzahl von gegeneinander isolierten Einzeldrähten umfasst,
insbesondere wobei in der HF-Litze ein Strom von mehr als 10 Ampere übertragbar ist.

11. Steckverbindersystem nach mindestens einem der vorangegangenen Ansprüche,
**dadurch gekennzeichnet, dass**
die metallischen Bestandteile aus nicht-magnetischem Metall ausgeführt sind.

12. Steckverbindersystem nach mindestens einem der vorangegangenen Ansprüche,
**dadurch gekennzeichnet, dass**
die HF-Litze von einem Primärleiter umfasst ist, der einen mittelfrequenten Wechselstrom führt.

13. Steckverbindersystem nach mindestens einem der vorangegangenen Ansprüche,
**dadurch gekennzeichnet, dass**
der Wechselstrom eine Frequenz im Bereich von 10kHz bis 100kHz aufweist, insbesondere wobei der Wechselstrom eine Frequenz im Bereich von 20kHz bis 50kHz aufweist.

14. Einspeisegerät für ein mittelfrequent arbeitendes System zur berührungslosen Energieübertragung,
wobei das Einspeisegerät einen im Wesentlichen konstanten mittelfrequenten Wechselstrom in einen Primärleiter einspeist, der Litze umfasst,
mit einem Steckverbindersystem nach Anspruch 1.

## Claims

1. A connector system for a system for contactless energy transmission operating using a medium frequency,
comprising a connector part (21, 23-26) with a first contact part (31) and a counter connector part (41-44) with a second contact part,
wherein first and second contact part are matched to one another,
wherein
the first contact part (31) is a crimp contact and is connected in a bonded manner, namely soldered, at its first axial end region to strands of a high-frequency stranded conductor,
and the first contact part (31) is connected in an insulator (32),
wherein the counter connector part (41-44) is a housing connector which is removably connected in a housing wall in a sealed manner and with a high degree of protection,
wherein the insulator (32) has one ,or more spring elements (33) with which the first contact part (31) is locked upon insertion into the insulator, and
wherein another insulator (42) is inserted in a sleeve (41), manufactured from plastics material or from a non-magnetic material, therefore from aluminium, brass or from another diamagnetic or paramagnetic material, wherein the sleeve (41) is arranged in a cutout of the housing wall.

2. A connector system according to at least one of the preceding claims, **characterised in that** the strands of the high-frequency stranded conductor are connected to one another in a bonded manner by means of the soldered connection.

3. A connector system according to at least one of the preceding claims, **characterised in that** the first contact part (31) has a cutout at its first axial end region, which cutout is, for the soldered connection of the first contact part to the strands of the high-frequency stranded conductor, filled up with soldering tin or another soldering means.

4. A connector system according to at least one of the preceding claims, **characterised in that** the high-frequency stranded conductor consists of a cable, to one end of which there is attached the connector part (21, 23-26).

5. A connector system according to at least one of the preceding claims, **characterised in that** the connector part comprises a metallic contact part which at its other axial end region is connectable in a force-locked manner to a first end region of a metallic contact part of a counter connector part.

6. A connector system according to at least one of the preceding claims, **characterised in that** the counter connector part (41-44) comprises a second metallic contact part, which has a soldered connection to a high-frequency stranded conductor at its second axial end region, and is connected in the additional insulator.

7. A connector system according to at least one of the preceding claims, **characterised in that** the insulator is a hollow part in the interior of which there can be inserted the contact part
and/or
the insulator comprises a thread at one axial end region, which thread is for removable connection to a strain relief nut
and/or
a knurled nut is provided at the insulator.

8. A connector system according to at least one of the preceding claims, **characterised in that** the connector assembly is tight and with a high degree of protection, use being made of seals.

9. A connector system according to at least one of the preceding claims, **characterised in that** an identification region is provided at the outer surface of the insulator.

10. A connector system according to at least one of the preceding claims, **characterised in that** the high-frequency stranded conductor comprises a plurality of individual wires insulated in relation to one another,
in particular wherein a current of more than 10 amperes can be transmitted in the high-frequency stranded conductor.

11. A connector system according to at least one of the preceding claims, **characterised in that** the metallic components are of non-magnetic metal.

12. A connector system according to at least one of the preceding claims, **characterised in that** the high-frequency stranded conductor consists of a primary conductor which carries a medium frequency alternating current.

13. A connector system according to at least one of the preceding claims, **characterised in that** the alternating current has a frequency in the range from 10kHz to 100 kHz, in particular wherein the alternating current has a frequency in the range from 20 kHz to 50 kHz.

14. A feeding apparatus for a system for contactless energy transmission operating using medium frequency,
wherein the feeding apparatus feeds a substantially constant medium-frequency alternating current into a primary conductor which consists of a stranded conductor, having a connector system according to claim 1.

## Revendications

1. Système de connexion enfichable dévolu à un système fonctionnant à fréquence moyenne, en vue de la transmission d'énergie sans contact,
comprenant une pièce (21, 23-26) de connexion enfichable, munie d'une première partie de contact (31) et
une pièce complémentaire (41-44) de connexion enfichable, pourvue d'une seconde partie de contact,
les première et seconde parties de contact étant réalisées avec adaptation mutuelle,
sachant que
la première partie de contact (31) est réalisée sous la forme d'un contact serti et est reliée à des fils d'un cordon HF, dans sa première région extrême axiale, par solidarisation matérielle notamment instaurée par brasage,
et ladite première partie de contact (31) est connectée dans un corps isolant (32),
la pièce complémentaire (41-44) de connexion enfichable étant une fiche de raccordement pour boîtiers, connectée amoviblement dans une paroi de boîtier, de manière étanche et avec protection de type élevé,
le corps isolant (32) présentant un ou plusieurs élément(s) élastique(s) (33) avec le(s)quel(s) la première partie de contact (31) coopère par déclic au stade de l'insertion dans ledit corps isolant, et
un corps isolant supplémentaire (42) étant intégré dans une douille (41) fabriquée en matière plastique ou en un métal non magnétique, à savoir de l'aluminium, du laiton ou un autre matériau diamagnétique ou paramagnétique, ladite douille (41) étant logée dans un évidement de la paroi du boîtier.

2. Système de connexion enfichable selon au moins l'une des revendications précédentes,
**caractérisé par le fait que**
les fils du cordon HF sont reliés les uns aux autres par solidarisation matérielle, au moyen de la jonction brasée.

3. Système de connexion enfichable selon au moins l'une des revendications précédentes,
**caractérisé par le fait que**
la première partie de contact (31) est dotée, dans sa première région extrême axiale, d'un évidement comblé d'étain à braser ou d'un autre agent de brasage, en vue d'instaurer la jonction brasée entre ladite première partie de contact et les fils du cordon HF.

4. Système de connexion enfichable selon au moins l'une des revendications précédentes,
**caractérisé par le fait que**
le cordon HF se présente comme un câble, à l'une des extrémités duquel la pièce (21, 23-26) de connexion enfichable est implantée.

5. Système de connexion enfichable selon au moins l'une des revendications précédentes,
**caractérisé par le fait que**
la pièce de connexion enfichable offre une partie métallique de contact pouvant être reliée mécaniquement, par son autre région extrême axiale, à une première région extrême axiale d'une partie métallique de contact d'une pièce complémentaire de connexion enfichable.

6. Système de connexion enfichable selon au moins l'une des revendications précédentes,
**caractérisé par le fait que**,
la pièce complémentaire (41-44) de connexion enfichable offre une seconde partie métallique de contact qui, dans sa seconde région extrême axiale, présente une jonction brasée avec le cordon HF, et est connectée dans le corps isolant supplémentaire.

7. Système de connexion enfichable selon au moins l'une des revendications précédentes,
**caractérisé par le fait que**
le corps isolant est une pièce creuse, dans l'espace interne de laquelle la partie de contact peut être insérée,
et/ou
ledit corps isolant est muni d'un filetage, dans l'une de ses régions extrêmes axiales, en vue de la liaison libérable avec un écrou de soulagement en traction,
et/ou
un écrou moleté est prévu sur ledit corps isolant.

8. Système de connexion enfichable selon au moins l'une des revendications précédentes,
**caractérisé par le fait que**
la connexion enfichable est de réalisation étanche et avec protection de type élevé, par utilisation de garnitures d'étanchement.

9. Système de connexion enfichable selon au moins l'une des revendications précédentes,
**caractérisé par le fait**
**qu'**une zone de caractérisation est prévue à la surface extérieure du corps isolant.

10. Système de connexion enfichable selon au moins l'une des revendications précédentes,
**caractérisé par le fait que**
le cordon HF comprend une multiplicité de fils individuels isolés les uns des autres, sachant notamment que ledit cordon HF autorise la transmission d'un courant supérieur à 10 ampères.

11. Système de connexion enfichable selon au moins l'une des revendications précédentes,
**caractérisé par le fait que**
les éléments constitutifs métalliques consistent en un métal non magnétique.

12. Système de connexion enfichable selon au moins l'une des revendications précédentes,
**caractérisé par le fait que**
le cordon HF se présente comme un conducteur primaire assurant la conduction d'un courant alternatif de fréquence moyenne.

13. Système de connexion enfichable selon au moins l'une des revendications précédentes,
**caractérisé par le fait que**
le courant alternatif présente une fréquence située dans la plage de 10 kHz à 100 kHz, ledit courant alternatif présentant, en particulier, une fréquence située dans la plage de 20 kHz à 50 kHz.

14. Appareil d'alimentation équipé d'un système de connexion enfichable conforme à la revendication 1, dévolu à un système fonctionnant à fréquence moyenne en vue de la transmission d'énergie sans contact,
ledit appareil d'alimentation introduisant un courant alternatif de fréquence moyenne, pour l'essentiel constant, dans un conducteur primaire se présentant comme un cordon.
